# EUROPÄISCHE PATENTSCHRIFT

(11) **EP 1 697 388 B1**
(45) Veröffentlichungstag und Bekanntmachung des Hinweises auf die Patenterteilung: **21.07.2010**
(21) Anmeldenummer: 04820433.3
(22) Anmeldetag: 14.12.2004
(51) Int. Cl.: C07F 9/54

(54) **VERFAHREN ZUR HERSTELLUNG VON PHOSPHONIUMSALZEN**
METHOD FOR PRODUCING PHOSPHONIUM SALTS
PROCEDE POUR PRODUIRE DES SELS DE PHOSPHONIUM

(30) Priorität: 17.12.2003 DE 10359434
(43) Veröffentlichungstag der Anmeldung: 06.09.2006
(73) Patentinhaber: BASF SE, 67056 Ludwigshafen (DE)
(72) Erfinder: SZARVAS, Laszlo, 67071 Ludwigshafen (DE); MASSONNE, Klemens, 67098 Bad Dürkheim (DE); LAAS, Harald, 67133 Maxdorf (DE); EXNER, Kai, Michael, 69214 Eppelheim (DE); GLAS, Detlev, 67227 Frankenthal (DE)
(86) Internationale Anmeldenummer: PCT/EP2004/014207
(87) Internationale Veröffentlichungsnummer: WO 2005/058924

(56) Entgegenhaltungen:
- WO-A-93/20087
- DE-A1- 19 517 422
- US-A- 3 373 207

## Beschreibung

Die vorliegende Erfindung betrifft ein Verfahren zur Herstellung von quartären Phosphoniumsalzen durch Umsetzung eines tertiären Phosphins mit einem gegebenenfalls substituierten, gesättigten oder ein- oder mehrfach ungesättigten Elektrophil mit 3 bis 25 Kohlenstoffatomen in ternären Lösemittelgemischen.

Quartäre Phosphoniumsalze dienen als Ausgangstoffe bzw. Intermediate bei der Synthese ein- oder mehrfach ungesättigter organische Wert- oder Wirkstoffe durch Wittig-Reaktion. Beispiele für solche Zielverbindungen stellen etwa Terpene, insbesondere Carotinoide wie z.B. β-Carotin oder Retinoide wie z.B. Vitamin A-Acetat dar. Diese werden nach wie vor unter Anwendung der Wittig-Reaktion totalsynthetisch in großtechnischem Maßstab hergestellt.

Eine Schwierigkeit bei in technischem Maßstab durchgeführten Phosphoniumsalzsynthesen besteht in der geringen Löslichkeit der Phosphoniumsalze in einer Vielzahl von organischen Lösungsmitteln. Dies führt häufig dazu, dass diese in unerwünschter Weise ausfallen, was erhebliche prozesstechnische Komplikationen mit sich bringen kann. Dementsprechend fehlte es nicht an Bestrebungen, Lösungen von Phosphoniumsalzen in polaren Lösungsmitteln bereitzustellen. Dies erforderte jedoch stets zusätzliche Verfahrensschritte und führte häufig zu erheblichen Ausbeuteverlusten. Daneben wurden oft große Lösemittelmengen nötig, was unter Berücksichtigung des wirtschaftlichen Aspektes wie auch aus Gründen der Umweltverträglichkeit wenig wünschenswert ist.

Die DE-A 27 27 384 offenbart ein Verfahren zur Herstellung von wässrigen Polyenyltriarylphosphoniumsalzlösungen das u.a. dadurch gekennzeichnet ist, dass man bei der Herstellung eingesetzte organische Lösungsmittel mit Wasserdampf aus der rohen Produktlösung abtreibt.

Die DE-A 27 29 974 beschreibt darüber hinaus ein Verfahren zur Herstellung von wäßrigen feinteiligen Dispersionen von Polyenyltriarylphosphoniumsalzen auf entsprechendem Wege.

Die EP-A 0 579 113 betrifft ein Verfahren zur Herstellung von cyclischen Acetalen des 3-Formyl-2-butenyl-triphenylphosphoniumchlorids. Der Teilschritt der Umsetzung des Chlorids mit Triphenylphoshin wird dabei in einem Alkanol mit 1 bis 3 Kohlenstoffatomen und/oder einem aliphatischen oder cycloaliphatischen Kohlenwasserstoff mit 6 bis 8 Kohlenstoffatomen bzw. einem entsprechenden Kohlenwasserstoffgemisch durchgeführt.

Die DE-A 25 05 869 offenbart ein Verfahren zur Herstellung symmetrischer Caratinoide aus den Molekülhälften durch Dimerisierung ihrer Phosphoniumsalze in zweiphasigen Reaktionssystemen.

Die DE-A 195 17 422 offenbart ein Verfahren zur Herstellung von β-Carotin-Präparaten mit hohem Anteil an dem 9(Z)-Isomeren, ausgehend von Mutterlaugen der technischen Herstellung von β-Ionylidenethyltriaryphosphoniumsalzen (C₁₅-Triarylphosphonium-salzen) durch Wittig-Reaktion eines an dem 9(Z)-Isomeren angereicherten C₁₅ - Triarylphosphoniumsalzes direkt mit β-Apo-12'-carotinal oder aber mit 2,7-Dimethyl-2,4,6-octatrien und anschließend mit dem C₁₅-Triarylphosphoniumsalz sowie anschließende thermische Isomerisierung.

Die US-A 3,373,207 betrifft ein Verfahren zur Herstellung quaternärer β-Ionylidenethyl-Phosphoniumsalze durch Umsetzung eines Carbonsäureesters von β-Ionylidenethanol mit einem tertiären Phosphin und einer Säure in einem Löse- oder Verbindungsmittel bei -20°C bis 120°C.

Aufgabe der vorliegenden Erfindung war es, Bedingungen für die Herstellung von organischen Phosphoniumsalzen zu finden, unter denen eine unerwünschte Ausfällung der Phosphoniumsalze und die Nachteile der bislang bekannten Verfahren vermieden werden.

Die Aufgabe wurde in überraschender Weise erfindungsgemäß gelöst durch die Bereitstellung eines Verfahrens zur Herstellung von quartären Phosphoniumsalzen durch Umsetzung eines Trialkyl-, Trialkenyl- oder Triarylphosphins mit einem gegebenenfalls substituierten, ein- oder mehrfach ungesättigten aliphatischen, cycloaliphatischen oder aromatisch-aliphatischen Alkohol mit 3 bis 25 Kohlenstoffatomen oder seinen Carbonsäureestern oder Ethern in Gegenwart einer Säure oder einem gegebenenfalls substituierten, aliphatischen, cycloaliphatischen oder aromatisch-aliphatischen Halogenid mit 3 bis 25 Kohlenstoffatomen, das dadurch gekennzeichnet ist, dass man die Umsetzung in einem ternären Lösungsmittelgemisch enthaltend Wasser, einen Alkohol mit 1 bis 6 Kohlenstoffatomen und einen Kohlenwasserstoff mit 5 bis 12 Kohlenstoffatomen oder einem Gemisch von verschiedenen Kohlenwasserstoffen mit 5 bis 12 Kohlenstoffatomen durchführt.

Das erfindungsgemäße Verfahren eignet sich zur Herstellung von quartären Phosphoniumsalzen ausgehend von aliphatischen, cycloaliphatischen oder aromatisch-aliphatischen Alkoholen mit 3 bis 25 Kohlenstoffatomen die jeweils ein- oder mehrfach olefinisch oder acetylenisch ungesättigt sein können und noch weitere, unter den Reaktionsbedingungen stabile Substituenten bzw. funktionelle Gruppen tragen können. Es eignet sich darüber hinaus zur Herstellung quartärer Phosphoniumsalze ausgehend von den entsprechenden Carbonsäureestern dieser Alkohole, vorzugsweise solcher, die sich von gesättigten aliphatischen Carbonsäuren ableiten. Daneben eignet sich das Verfahren auch zur Herstellung quartärer Phosphoniumsalze ausgehend von aliphatischen, cycloaliphatischen oder aromatisch-aliphatischen Halogeniden mit 3 bis 25 Kohlenstoffatomen, die gesättigt oder auch ein- oder mehrfach olefinisch oder acetylenisch ungesättigt sein können und darüber hinaus ebenfalls noch weitere, unter den Reaktionsbedingungen stabile Substituenten bzw. funktionelle Gruppen tragen können.

Alternativ bzw. ergänzend dazu eignen sich als Ausgangsstoffe für das erfindungsgemäße Verfahren neben den besagten Alkoholen auch die davon abgeleiteten Ether, wobei der neu hinzugekommene Etherrest 1 bis 6 Kohlenstoffatome enthalten kann und üblicherweise einen aliphatischen, mitunter auch einen cyclischen oder aromatischen und gegebenenfalls substituierten Rest darstellt.

Die erfindungsgemäß mit einem tertiären Phosphin umzusetzenden Ausgangsverbindungen können verzweigt oder unverzweigt sein und cyclische Strukturelemente enthalten, die ihrerseits gesättigt, ungesättigt bzw. aromatisch sein können, wobei die einzelnen Strukturelemente ihrerseits Substituenten wie beispielweise Halogenatome, Alkylreste mit einem bis 7 Kohlenstoffatomen wie etwa Methyl-, Ethyl-, Propyl-, Isopropyl-, n-Butyl-, t-Butyl-, Pentyl- und/oder Hexyl-, oder auch Heteroatome wie etwa N, O die ihrerseits weitere Substituenten tragen können. Unter Halogen ist dabei wie im Rahmen der gesamten vorliegenden Erfindung F, Cl oder Br zu verstehen. Als weitere bevorzugte Substituenten seine beispielsweise Amine wie etwa NH₂, Dibenzylamin und Dimethylamin aber auch Sauerstoffgebundene Substituenten wie z.B. Methoxy-, Acetoxy- oder Benzyloxy- genannt. Daneben können die Ausgangsverbindungen auch unter den Reaktionsbedingungen stabile funktionelle Gruppen wie z. B. Carbonylfunktionen, speziell Keto-Carbonylfunktionen, die gegebenenfalls auch α,β-ungesättigt sein können oder in α- oder β-Position zu einer Hydroxy- oder Acetoxy-Gruppe stehen können, aber auch Ester- oder Nitril-Funktionen, enthalten.

Die vorstehend beschriebenen ein- oder mehrfach ungesättigten Alkohole, Halogenide, Ester und Ether, die sich zur erfindungsgemäßen Umsetzung zu quartären Phosphoniumsalzen eignen, werden im Rahmen der vorliegenden Erfindung gemäß ihres chemischen Reaktionsverhaltens auch als Elektrophile bezeichnet.

Alle im Rahmen der vorliegenden Erfindung genannten ein- oder mehrfach olefinisch ungesättigten Verbindungen können in Form ihrer jeweils möglichen Doppelbindungsisomere oder in Form von Gemischen derselben vorliegen bzw. eingesetzt oder erhalten werden.

Die Ausgangsverbindungen werden erfindungsgemäß mit einem tertiären Phosphin umgesetzt. Die Struktur der organischen Reste des Phosphins ist dabei nicht kritisch und kann über einen breiten Bereich variiert werden. So können die organischen Reste des Phosphins ausgewählt sein aus den Gruppen der Alkyl-, Alkenyl- oder Arylreste mit 1 bis 9 Kohlenstoffatomen und innerhalb dieser Gruppen gleich oder verschieden, bevorzugt gleich sein. Darüber hinaus könne die genannten Reste ihrerseits substituiert sein, beispielsweise durch eines oder mehrere Halogenatome oder auch einen oder mehrere Alkylreste mit 1 bis 4 Kohlenstoffatomen wie z.B. Methyl-, Ethyl-, Isopropyl- und/oder tert. Butyl-. Beispiele für geeignete Phosphine sind u.a. Trimethyl-, Triethyl- und Triallyphosphin sowie Triphenyl-, Tri-para-Tolyl-, Tri-ortho-Tolyl- und Trimesitylphosphin. Ein besonders bevorzugtes tertiäres Phosphin ist Triphenylphosphin.

Zur Durchführung des erfindungsgemäßen Verfahrens setzt man das gewählte Elektrophil in einem ternären Lösemittelgemisch enthaltend Wasser, einen Alkohol mit 1 bis 6 Kohlenstoffatomen und einen Kohlenwasserstoff mit 5 bis 12 Kohlenstoffatomen oder einem Gemisch von verschiedenen Kohlenwasserstoffen mit 5 bis 12 Kohlenstoffatomen um. Unter einem ternären Lösemittelgemisch ist im Rahmen der vorliegenden Erfindung ein Stoffgemisch zu verstehen, das drei verschiedene Lösemittelkomponenten enthält und vorzugsweise aus drei verschiedenen Lösemittelkomponenten besteht. Die einzelnen Komponenten zeichnen sich dabei vorzugsweise durch eine unterschiedliche Polarität bzw. unterschiedliche Löseeigenschaften aus. Sie können vollständig oder partiell miteinander mischbar sein und ein Gemisch bilden, das ein- oder, im Fall partiell mischbarer Komponenten, zwei- oder mehrphasig sein kann. Die im Rahmen des erfindungsgemäßen Verfahrens durchzuführende Umsetzung kann dabei unabhängig voneinander in einer oder mehrerer der vorliegenden Phasen stattfinden.

Als geeignete Lösemittelkomponenten seien beispielhaft genannt: Wasser, Alkohole mit 1 bis 6 Kohlenstoffatomen und 1, 2 und/oder 3 Hydroxyfunktionen wie z.B. Methanol, Ethanol, Propanol, Isopropanol, 1-Butanol, 2-Butanol, Glycol, 1,2-Propandiol, 1,3-Propandiol oder Gemische derselben und Kohlenwasserstoffe mit 5 bis 12 Kohlenstoffatomen oder Gemische derselben. Geeignete Kohlenwasserstoffe können verzweigt oder unverzweigt aliphatisch, cyclisch, cycloaliphatisch, aromatisch und aromatisch-aliphatisch sein. Beispielhaft seien hierfür genannt: n-Pentan, n-Hexan, Cyclohexan, Methylcyclohexan, 1,2-Dimethylcyclohexan, 1,3-Dimethylcyclohexan, 1,4-Dimethylcyclohexan, Ethylcyclohexan, 2-Methylhexan, 3-Methylhexan, n-Heptan, Cycloheptan, Methylcycloheptan, n-Octan, Benzol, Toluol, ortho-Xylol, meta-Xylol, para-Xylol oder Gemische derselben.

Im Rahmen der vorliegenden Erfindung hat es sich als vorteilhaft erwiesen, wenn man als eine der Lösemittelkomponenten Wasser einsetzt. Weiterhin hat es sich als vorteilhaft erwiesen, neben Wasser als erster Komponente als zweite Komponente einen Alkohol wie z.B. Methanol oder Ethanol und als dritte Komponente einen Kohlenwasserstoff einzusetzen. Dabei ist es nicht notwendig, dass man die einzelnen Komponenten in reiner Form einsetzt. So kann es mitunter vorteilhaft sein, als Kohlenwasserstoffkomponente ein Gemisch von verschiedenen Kohlenwasserstoffen, beispielsweise ein Gemisch von verschiedenen Isomeren des Heptans oder auch Kohlenwasserstoffschnitte bestehend aus Kohlenwasserstoffen mit 6 bis 8, bevorzugt mit 6 oder 7, besonders bevorzugt mit 7 Kohlenstoffatomen einzusetzen. Typische Inhaltstoffe eines solchen auch als technisches Heptan oder im Rahmen der vorliegenden Erfindung als Heptan zu bezeichnenden C₇-Schnittes umfassen üblicherweise mindestens eine der folgen Verbindungen: Hexan, Heptan, Octan, Isooctan, Cyclohexan, Toluol, Cyclopentan, Methylcyclopentan, Dimethylcyclopentan (1,1-, 1,2-, 1,3-), Ethylcyclopentan, 2-Methylhexan, 3-Methylhexan, 2-Methylheptan, 3-Methylheptan, 4-Methylheptan, 2-Ethylhexan, 3-Ethylhexan, Methylcyclohexan, Dimethylcyclopentane (1,1-, 1,2-, 1,3-) und dergleichen mehr. Daneben kann die gewählte Kohlenwasserstoffkomponente auch aromatische und/oder aliphatisch-aromatische Nebenkomponenten beinhalten, sofern diese nicht ohnehin als Kohlenwasserstoffkomponente gewählt sind.

Vergleichbare Erwägungen können auch für die weiteren Komponenten des erfindungsgemäß einzusetzenden Lösemittelgemisches angestellt werden. So kann man beispielsweise als Alkoholkomponente einen Alkohol wie z.B. Methanol, Ethanol oder n- bzw. iso-Propanol wählen, der als Nebenbestandteile bzw. Verunreinigungen weitere der oben genannten Alkohole enthält. Die gewählte Alkoholkomponente kann auch Wasser enthalten, welches dann der Wasserkomponente des erfindungsgemäßen ternären Lösemittelgemisches zuzurechnen ist. Dabei sind die üblichen geringen Wassergehalte der technischen Lösemittel nicht als eigenständige dritte Komponente des Lösemittelgemisches zu werten. Ein Beispiel für einen Wasser enthaltenden Alkohol ist Methanol das bis zu etwa 40 Gew.-% Wasser enthalten kann. Solches Methanol ist als ein bevorzugtes Lösemittel für die Alkoholkomponente der erfindungsgemäß einzusetzenden ternären Lösemittelgemische zu betrachten.

Es hat sich als vorteilhaft erwiesen, wenn das fertige ternäre Lösemittelgemisch in seiner Gesamtmenge zu mindestens etwa 5 Gew.-%, bevorzugt zu mindestens etwa 10 Gew.-% aus Wasser besteht.

Gute Ergebnisse erzielt man in der Regel, wenn man als weitere Komponenten Methanol und Heptan wie oben beschrieben wählt. Im Rahmen der vorliegenden Erfindung bevorzugte Lösemittelgemische bestehen demnach aus Wasser, Methanol und Heptan wobei Methanol in nicht vorgetrockneter Form eingesetzt werden kann, Heptan ein Isomerengemisch wie oben beschreiben darstellt und das fertige Lösemittelgemisch zu mindestens etwa 5 Gew.-%, bevorzugt zu mindestens etwa 10 Gew.-% aus Wasser besteht.

Die Anteile der Alkohol- bzw. der Kohlenwasserstoffkomponente können innerhalb weiter Grenzen im Prinzip frei gewählt werden. Als zweckmäßig hat es sich erwiesen, die Alkoholkomponente als, mengenmäßig betrachtet, Hauptkomponente einzusetzen. Mit Vorteil setzt man solche Lösemittelgemische ein, die zu mindestens etwa 50 Gew.-% aus der Alkoholkomponente, bevorzugt aus Methanol bestehen und daneben mindestens etwa 10 Gew.-% Wasser enthalten. Im Rahmen des erfindungsgemäßen Verfahrens besonders bevorzugte ternäre Lösemittelgemische bestehen zu etwa aus
55 - 85 Gew.-% Methanol
10 - 25 Gew.-% Heptan und
5 - 20 Gew.-% Wasser,
wobei sich die innerhalb der genannten Bereiche gewählten Anteile zu 100 Gew.-% addieren müssen.

Die im Rahmen des erfindungsgemäßen Verfahrens einsetzbaren ternären Lösemittelgemische können, wie bereits erwähnt, ein-, zwei und gegebenenfalls auch mehrphasige Gemische bilden. Bevorzugt setzt man solche Gemische ein, die in Form zweiphasiger Gemische, in der Regel in Form einer wässrigen und einer organische Phase, vorliegen.

Das erfindungsgemäße Verfahren eignet sich insbesondere zur Herstellung von quartären Phosphoniumsalzen der allgemeinen Formel I

[R¹-P(R²)₃]⁺ X⁻ (I),

wobei
- R¹: einen gegebenenfalls substituierten, ein- oder mehrfach ungesättigten a- liphatischen, cycloaliphatischen oder aromatisch-aliphatischen Rest mit 3 bis 25 Kohlenstoffatomen,
- R²: einen Alkyl-, Alkenyl- oder Arylrest mit 1 bis 9 Kohlenstoffatomen und
- X: das Anionenäquivalent einer organischen oder anorganischen Säure
bedeutet, durch Umsetzung eines Phosphins der allgemeinen Formel II

P(R²)₃ (II),

wobei R² die oben angegebene Bedeutung besitzt, mit einem ein- oder mehrfach ungesättigten Elektrophil der allgemeinen Formeln III oder IV,

R¹-Y (III)

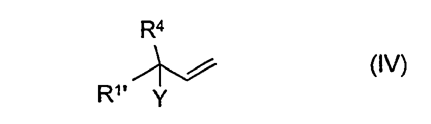

wobei R¹ die oben angegebene Bedeutung besitzt und
- R^{1'}: einen gegebenenfalls substituierten, aliphatischen, cycloaliphatischen oder aromatisch-aliphatischen Rest mit 1 bis 21 Kohlenstoffatomen,
- Y: OH, Cl, Br, O(CO)R³, oder OR³ bedeutet und R³ für einen aliphatischen Kohlenwasserstoffrest mit 1 bis 6 Kohlenstoffatomen steht und
- R⁴: H oder CH₃
bedeutet und im Fall der Umsetzung eines Elektrophils der allgemeinen Formel IV R¹ in Formel I für ein Strukturelement der allgemeinen Formel V 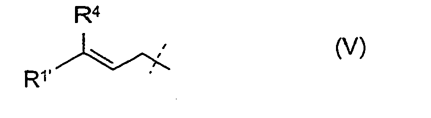 steht, wobei R1' und R⁴ die oben angegebene Bedeutung besitzen.

Als Beispiele für geeignete Phosphine seien etwa genannt: Trimethyl-, Triethyl- und Triallyphosphin sowie Triphenyl-, Tri-para-Tolyl-, Tri-ortho-Tolyl- und Trimesitylphosphin. Als Abgangsgruppe Y der allgemeinen Formeln III und IV seien bevorzugt genannt: OH, Cl, Br, OR³oder O(CO)R³, d.h. einem von einer Säure R³COOH und einem Alkohol abgeleiteten Ester, wobei R³ einen aliphatischen Kohlenwasserstoffrest mit 1 bis 6 Kohlenstoffatomen darstellt. Besonders bevorzugt sind darunter die von der Essigsäure abgeleiteten Ester.

In einer besonders bevorzugten Ausführungsform eignet sich das erfindungsgemäße Verfahren zur Herstellung von quartären Phosphoniumsalzen der allgemeinen Formel I' 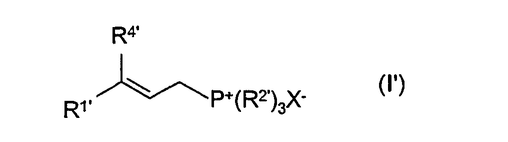 wobei
- R^{1'}: die oben angegebene Bedeutung besitzt,
- R^{2'}: einen Arylrest mit 1 bis 9 Kohlenstoffatomen
- R^{4'}: H oder CH₃ und
- X: das Anionenäquivalent einer organischen oder anorganischen Säure
bedeutet, durch Umsetzung eines Phosphins der allgemeinen Formel II'

P(R^{2'})₃ (II'),

wobei R^{2'} die oben angegebene Bedeutung besitzt, mit einem gegebenenfalls substituierten, ein- oder mehrfach ungesättigten Elektrophil der allgemeinen Formeln IV oder VI, 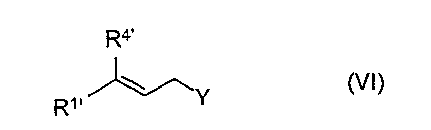 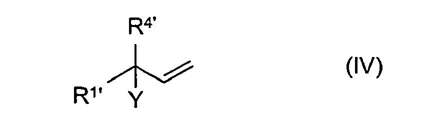 wobei R^{1'}und R^{4'} die oben angegebenen Bedeutungen und Y die für Formel III und IV angegebene Bedeutung besitzen.

Beispielhaft seien als erfindungsgemäß einsetzbare Elektrophile die folgenden Verbindungen genannt, wobei die genannten Alkohole auch in Form ihrer Chloride oder Bromide eingesetzt werden können und wobei gegebenenfalls vorhandene Hydroxy- und/oder Carbonylfunktionen in geschützter Form, z.B. als Acetale, Ketale und/oder Ether vorliegen können: Retinol, Retinol-Acetat (Viatmin A-Acetat), β-Vinyl-ionol, 3,7,11-Trimethyl-dodeca-1,4,6,10-tetraen-3-ol, 1,1-Dimethoxy-2-methyl-but-3-en-2-ol, 6-Hydroxy-3-(7-hydroxy-3,7-dimethyl-nona-1,3,5,8-tetraenyl)-2,4,4-trimethyl-cyclohex-2-enon, 4-(7-Hydroxy-3,7-dimethyl-nona-1,3,5,8-tetraenyl)-3,5,5-trimethyl-cyclohex-3-enol, But-2-ene-1,4-diol, 1,4-Dibrom-but-2-en, 1,4-Dichlor-but-2-en, 4-Hydroxy-2-methyl-but-2-enal, 4-Brom-2-methyl-but-2-enal, 4-Chlor-2-methyl-but-2-enal, 4-Acetoxy-2-methyl-but-2-enal, 4-Methoxy-2-methyl-but-2-en-1-ol, 3,7,11-Trimethyl-dodeca-2,4,6,10-tetraen-1-ol, 4-Hydroxy-3-methyl-but-2-ensäuremethylester, 4-Brom-3-methyl-but-2-ensäuremethylester, 4-Chlor-3-methyl-but-2-ensäuremethylester, 2-Hydroxy-2-methyl-but-3-ensäureethylester, 2-Brom-2-methyl-but-3-ensäureethylester, 2-Chlor-2-methyl-but-3-ensäureethylester, 6-Hydroxy-3-(5-hydroxy-3-methyl-pent-3-en-1-ynyl)-2,4,4-trimethyl-cyclohex-2-enon, 6-Acetoxy-3-(5-hydroxy-3-methyl-pent-3-en-1-ynyl)-2,4,4-trimethyl-cyclohex-2-enon, 6-Chlor-3-(5-hydroxy-3-methyl-pent-3-en-1-ynyl)-2,4,4-trimethyl-cyclohex-2-enon, 4-(5-Hydroxy-3-methyl-pent-3-en-1-ynyl)-3,5,5-trimethyl-cyclohex-3-enol, 4-(5-Chlor-3-methyl-pent-3-en-1-ynyl)-3,5,5-trimethyl-cyclohex-3-enol, 4-(5-Acetoxy-3-methyl-pent-3-en-1-ynyl)-3,5,5-trimethyl-cyclohex-3-enol, 6-Hydroxy-3-(5-hydroxy-3-methyl-penta-1,3-dienyl)-2,4,4-trimethyl-cyclohex-2-enon, 6-Hydroxy-3-(5-chlor-3-methyl-penta-1,3-dienyl)-2,4,4-trimethyl-cyclohex-2-enon, 6-Hydroxy-3-(5-brom-3-methyl-penta-1,3-dienyl)-2,4,4-trimethyl-cyclohex-2-enon, 6-Chlor-3-(5-chlor-3-methyl-penta-1,3-dienyl)-2,4,4-trimethyl-cyclohex-2-enon, 6-Hydroxy-3-(5-brom-3-methyl-penta-1,3-dienyl)-2,4,4-trimethyl-cyclohex-2-enon, 6-Acetoxy-3-(5-hydroxy-3-methyl-penta-1,3-dienyl)-2,4,4-trimethyl-cyclohex-2-enon, 6-Hydroxy-3-(5-acetoxy-3-methyl-penta-1,3-dienyl)-2,4,4-trimethyl-cyclohex-2-enon, 4-(5-Hydroxy-3-methyl-penta-1,3-dienyl)-3,5,5-trimethyl-cyclohex-3-enol, 4-(5-Chlor-3-methyl-penta-1,3-dienyl)-3,5,5-trimethyl-cyclohex-3-enol, 4-(5-Brom-3-methyl-penta-1,3-dienyl)-3,5,5-trimethyl-cyclohex-3-enol, 4-(5-Acetoxy-3-methyl-penta-1,3-dienyl)-3,5,5-trimethyl-cyclohex-3-enol, 6-Hydroxy-3-(9-hydroxy-3,7-dimethyl-nona-1,3,5,7-tetraenyl)-2,4,4-trimethyl-cyclohex-2-enon, 6-Acetoxy-3-(9-hydroxy-3,7-dimethyl-nona-1,3,5,7-tetraenyl)-2,4,4-trimethyl-cyclohex-2-enon, 5-Hydroxy-3-(9-hydroxy-3,7-dimethyl-nona-1,3,5,7-tetraenyl)-2,4,4-trimethyl-cyclohex-2-enon, 5-Acetoxy-3-(9-hydroxy-3,7-dimethyl-nona-1,3,5,7-tetraenyl)-2,4,4-trimethyl-cyclohex-2-enon, 4-(9-Hydroxy-3,7-dimethyl-nona-1,3,5,7-tetraenyl)-3,5,5-trimethyl-cyclohex-3-enol, 4-(9-Acetoxy-3,7-dimethyl-nona-1,3,5,7-tetraenyl)-3,5,5-trimethyl-cyclohex-3-enol, 3-Methyl-1-(2,2,6-trimethyl-7-oxa-bicyclo[2.2.1]hept-1-yl)-penta-1,4-dien-3-ol und 6-Hydroxy-3-(3-hydroxy-3-methyl-1,4-pentadienyl)-2,4,4-trimethyl-cyclohex-2-enon.

Bevorzugte Elektrophile sind beispielsweise: Retinol, Retinol-Acetat (Viatmin A-Acetat), β-Vinyl-ionol, 3,7,11-Trimethyl-dodeca-1,4,6,10-tetraen-3-ol, 1,4-Dibrom-but-2-en, 1,4-Dichlor-but-2-en, 4-Brom-2-methyl-but-2-enal, 4-Chlor-2-methyl-but-2-enal, 4-Acetoxy-2-methyl-but-2-enal, 2-Brom-2-methyl-but-3-ensäureethylester, 2-Chlor-2-methyl-but-3-ensäureethylester, 6-Hydroxy-3-(5-hydroxy-3-methyl-pent-3-en-1-ynyl)-2,4,4-trimethyl-cyclohex-2-enon, 6-Acetoxy-3-(5-hydroxy-3-methyl-pent-3-en-1-ynyl)-2,4,4-trimethyl-cyclohex-2-enon, 4-(5-Hydroxy-3-methyl-pent-3-en-1-ynyl)-3,5,5-trimethyl-cyclohex-3-enol, 4-(5-Chlor-3-methyl-pent-3-en-1-ynyl)-3,5,5-trimethyl-cyclohex-3-enol, 6-Hydroxy-3-(5-hydroxy-3-methyl-penta-1,3-dienyl)-2,4,4-trimethyl-cyclohex-2-enon, 6-Hydroxy-3-(5-chlor-3-methyl-penta-1,3-dienyl)-2,4,4-trimethyl-cyclohex-2-enon, 6-Hydroxy-3-(5-brom-3-methyl-penta-1,3-dienyl)-2,4,4-trimethyl-cyclohex-2-enon, 4-(5-Hydroxy-3-methyl-penta-1,3-dienyl)-3,5,5-trimethyl-cyclohex-3-enol, 4-(5-Chlor-3-methyl-penta-1,3-dienyl)-3,5,5-trimethyl-cyclohex-3-enol, 4-(5-Brom-3-methyl-penta-1,3-dienyl)-3,5,5-trimethyl-cyclohex-3-enol, 3-Methyl-1-(2,2,6-trimethyl-7-oxa-bicyclo[2.2.1]hept-1-yl)-penta-1,4-dien-3-ol und 6-Hydroxy-3-(3-hydroxy-3-methyl-1,4-pentadienyl)-2,4,4-trimethyl-cyclohex-2-enon.

Als Beispiele für durch das erfindungsgemäße Verfahren zugängliche Phosphoniumsalze der allgemeinen Formel I seien insbesondere solche genannt, die als Ausgangsstoffe oder Zwischenprodukte für Synthese von Verbindungen der Carotinoid- bzw. Retinoidreihe durch Wittig-Olefinierung dienen können: Beispiele hierfür sind u.a.: βlonylidenethyl-triphenylphosphoniumhydrogensulfat bzw. -chlorid, Axerphtylphosphoniumhydrogensulfat bzw. -chlorid, 3,7,11,15-Tetramethyl-hexadeca-2,4,6,8,10,14-hexaen-yl-1-triphenylphosphoniumhydrogensulfat bzw. -chlorid, 5-(2',6',6'-Trimethyl-cyclohexen-1'-yl-1')-3-methyl-pentadien-2,4-yl-1-triphenylphosphoniumhydrogensulfat bzw. -chlorid, 9-[2',6',6'-Trimethylcyclohexen-1'-yl-1']-3,7-dimethyl-2,6,8-nonatrien-4-in-1-yl-triphenylphosphoniumbromid, 3,7,11,15-Tetramethylhexadeca-2,4,6,8,10-pentaen-1-yl-triphenylphosphoniumhydrogensulfat sowie weitere in der DE-A 25 05 869 genannte Phosphoniumsalze.

Die erfindungsgemäße Umsetzung von Alkoholen, Ethern und Estern mit dem gewählten tertiären Phosphin führt man mit Vorteil in Gegenwart einer organischen oder anorganischen Säure durch. Als geeignete Säuren sind dabei insbesondere Salzsäure, Schwefelsäure, Bromwasserstoffsäure, Ameisensäure, Essigsäure, Propionsäure oder Phosphorsäure, Methansulfonsäure, Trifluormethansulfonsäure, para-Toluolsulfonsäure, Benzolsulfonsäure oder auch Trifluoressigsäure, bevorzugt Salzsäure und Schwefelsäure zu nennen. Diese werden üblicherweise in einer Menge von etwa 0,9 bis etwa 1,1 Äquivalenten, bezogen auf die Menge an eingesetztem Phosphin, eingesetzt. Die Anionenäquivalente besagter Säuren, insbesondere der Salz-, Schwefel- und Bromwasserstoffsäure bilden üblicherweise die Gegenionen X der im Rahmen des erfindungsgemäßen Verfahrens hergestellten Phosphoniumsalze der allgemeinen Formel I.

Im Fall der erfindungsgemäßen Umsetzung organischer Halogenide als Elekrophil bildet üblicherweise das substituierte Halogenidion, insbesondere Cl oder Br das Gegenion X besagter Phosphoniumsalze der allgemeinen Formel I.

Eine ganz besonders bevorzugte Ausführungsform des erfindungsgemäßen Verfahrens ist **dadurch gekennzeichnet, dass** man zur Herstellung von quartären Phosphoniumsalzen der Formel I" 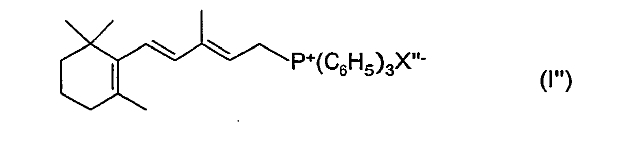 wobei
- X": Cl, Br oder HSO₄ bedeutet,

Triphenylphosphin mit β-Vinyl-Ionol in erfindungsgemäßer Weise umsetzt.

An die Reaktionsbedingungen unter denen das erfindungsgemäße Verfahren üblicherweise durchgeführt wird sind keine besonderen Anforderungen zu stellen. So bewegen sich beispielsweise Reaktionstemperatur, Konzentrationen der Ausgangsstoffe im gewählten Lösemittelgemisch, Reaktionszeiten und sowie Reinheit der eingesetzten Reagenzien in der Regel in Bereichen, die dem Fachmann hinlänglich bekannt und beispielsweise in Houben-Weyl, "Methoden der Organischen Chemie", Band 12/1, Thieme, Stuttgart, 1963 und Band E1, Thieme, Stuttgart, 1982 oder auch in Johnson, Kaska, Starzewski, Pixon "Ylides ans Imines of Phosporus", Wiley, New York, 1993 nachgeschlagen werden können.

Üblicherweise setzt man das umzusetzende Elektrophil in einer Reinheit von etwa 50 bis etwa 99% ein. Das gewählte Phosphin setzt man in der Regel in einer Reinheit von etwa 80 bis etwa 99,5% und in etwa äquimolarem Verhältnis zum Elektrophil, d.h. in etwa 0,9 bis etwa 1,1 Äquivalenten bezogen auf die Menge an Elektrophil, ein. Setzt man als Elektrophil einen Alkohol oder einen Ester um, führt man die Reaktion, wie bereits erwähnt, mit Vorteil in Gegenwart einer organischen oder anorganischen Säure durch. Bevorzugt setzt man Salzsäure, üblicherweise in Form einer etwa 10 bis etwa 36 gew.-%igen wässrigen Lösung oder Schwefelsäure in Form einer etwa 70 bis etwa 98 gew.-%igen wässrigen Lösung ein. Bevorzugt setzt man wässrige Schwefelsäure, insbesondere solche mit einer Konzentration von etwa 70 bis etwa 80 Gew.-% ein. Die gewählte Säure wird üblicherweise in einer, auf die Menge an umzusetzendem Elektrophil bezogenen Menge von etwa 0,9 bis etwa 1,2 Äquivalenten eingesetzt.

Die Reaktionsführung unterscheidet sich nicht prinzipiell von den Vorgehensweisen bei den dem Fachmann an sich bekannten Verfahren. Üblicherweise legt man das Phosphin in dem gewählten ternären Lösemittelgemisch vor und gibt dann, im Falle der Umsetzung von Alkoholen oder Estern als Elektrophil, die Säure zu. Andere Reihenfolgen der Zugabe sind jedoch auch möglich. Die Säurezugabe nimmt man normalerweise langsam, eventuell tropfenweise und bei Temperaturen von etwa Raumtemperatur bis etwa 70°C vor. Die Säurezugabe ist dann üblicherweise nach etwa 1 bis etwa 10 h abgeschlossen. Die Zugabe des umzusetzenden Elektrophils kann zeitgleich oder zeitversetzt, üblicherweise nach abgeschlossener Zugabe der Säure erfolgen und wird normalerweise innerhalb des gleichen Temperaturbereiches vorgenommen und ist normalerweise ebenfalls nach 1 bis 10 h abgeschlossen. Zur Vervollständigung des Umsatzes wird das Reaktionsgemisch üblicherweise noch bei Temperaturen im angegebenen Bereich nachgerührt.

An das Reaktionsgefäß bzw. den Reaktor sind keine besonderen Anforderungen zu stellen. Die Aufarbeitung des Reaktionsgemisches und die Isolierung des Reaktionsproduktes kann nach dem Fachmann an sich bekannten Methoden vorgenommen werden.

Mit besonderem Vorteil trennt man des erfindungsgemäß eingesetzte ternäre Lösemittelgemisch nach beendeter Umsetzung von den restlichen Bestandteilen des Reaktionsgemisches ab und führt es wieder in den Reaktionsprozess zurück. Dabei kann es notwendig werden, dass die ursprüngliche Zusammensetzung des ternären Lösemittelgemisches wieder hergestellt werden muss. Dies erfolgt zweckmäßigerweise durch Zugabe einer oder zweier Komponenten de gewählten Lösemittelgemisches. Selbstverständlich kann auf diese Weise auch jede weitere, von der ursprünglich gewählten Zusammensetzung verschiedene Zusammensetzung eingestellt werden.

Durch das beschriebene Verfahren erhält man die gewünschten Phosphoniumsalze üblicherweise in ausgezeichneten Ausbeuten und hoher Reinheit, was vor allem für Umsetzungen im technischen Maßstab einen besonderen Vorteil darstellt. Prinzipiell kann das Verfahren jedoch mit gutem Erfolg in jedem Maßstab durchgeführt werden.

Ein weiterer besonderer Vorteil des erfindungsgemäßen Verfahrens besteht darin, dass durch die geeignete Zusammensetzung des ternären Lösemittelgemisches, die unerwünschte Ausfällung bzw. Auskristallisation der zu synthetisierenden Phosphoniumsalze in der Regel weitestgehend unterbunden werden kann. Dadurch eignet sich sich das beschriebene Verfahren in besonderem Maße auch für kontinuierlich durchgeführte Umsetzungen in technischem Maßstab.

Das erfindungsgemäße Verfahren eignet sich in besonderem Maße zur Herstellung von quartären Phosphoniumsalzen, die wertvolle Ausgangsstoffe bzw. Intermediate zur Herstellung von Polyisoprenoiden bzw. Carotinoiden und Retinoiden sind.

Die Erfindung betrifft demzufolge auch die Verwendung von gemäß dem erfindungsgemäßen Verfahren hergestellten Phosphoniumsalzen zur Herstellung von Polyisoprenoiden, insbesondere von Retinol (Vitamin A), Vitamin A-Acetat, Vitamin A-Propionat, Vitamin A-Palmitat, Retinal, Retinsäuren, β-Carotin, α-Carotin, δ-Carotin" Zeaxanthin, Astaxanthin, Canthaxanthin, Lycopin, Citranaxanthin, β-Apo-8'-carotinal, Crocetin, α-Cryptoxanthin, β-Cryptoxanthin, Phytoen, Lutein, Bixin, Capsanthin, Capsorubin, β-Apo-8'-carotinsäuremethylester, β-Apo-8'-carotinsäureethylester, β-Apo-8'-carotin-säurepropionylester, β-Apo-8'-carotinsäurepalmitylester.

Die folgenden Beispiele dienen der Erläuterung der Erfindung ohne sie jedoch in irgend einer Weise einzuschränken:

### Beispiel 1:

### Herstellung von β-Ionolydentriphenylphosphoniumhydrogensulfat in einem ternären Lösemittelgemisch

139,7 g Triphenylphosphin wurden in einem Lösemitelgemisch bestehend aus 206,8 g Methanol, 44,46 g Wasser und 40,68 g Heptan bei 40°C unter Rühren vorgelegt. Innerhalb von1 h wurden 72,7 g 75%ige Schwefelsäure zugetropft. Anschließend wurden 130 g β-Vinyl-lonol mit einer Reinheit von 92,1% innerhalb von 2 h zudosiert, die Temperatur auf 50°C angehoben und 4 h nachgerührt. Nach extraktiver Aufarbeitung erhielt man β-Ionolydentriphenylphosphoniumhydrogensulfat in einer Ausbeute von 99,9% (bezogen auf eingesetztes Triphenylphosphin).

### Vergleichsbeispiel 1:

### Herstellung von β-Ionolydentriphenylphosphoniumhydrogensulfat in Aceton

90,8 g Triphenylphosphin wurden in 396 g Aceton unter Rühren vorgelegt und 36,9 g 96%ige Schwefelsäure und 84,5 g 92,1 %iges β-Vinyl-Ionol gleichzeitig innerhalb von 2h bei einer Temperatur von 37°C zugetropft. Nach 90 min setzte Kristallisation ein. Es wurde noch 3 h bei 25°C nachgerührt, anschließend auf 15°C abgekühlt und schließlich abgesaugt. Man erhielt β-Ionolydentriphenylphosphoniumhydrogensulfat in einer Menge von 134,6 g entsprechend 69,2 % d.Th (bezogen auf eingesetztes Triphenylphosphin).

### Vergleichsbeispiel 2:

### Herstellung von β-Ionolydentriphenylphosphoniumhydrogensulfat in Methanol

181,6 g Triphenylphosphin wurden unter Rühren in 396 g Methanol bei einer Temperatur von 60°C vorgelegt und 73,75 g einer 96%igen Schwefelsäure innerhalb einer Stunde und anschließend 169g 92,1%iges β-Vinyl-Ionol innerhalb von 10 min zugegeben. Das Gemisch wurde 1 h bei 60°C nachgerührt und anschließend extraktiv aufgearbeitet. Man erhielt 375 g β-Ionolydentriphenylphosphoniumhydrogensulfat entsprechend 96,3% d.Th. (bezogen auf eingesetztes Triphenylphosphin).
Bei einer Nachrührzeit von 4 h verringerte sich die Ausbeute der Zielverbindung auf 95,5 % d. Th.

### Vergleichsbeispiel 3:

### Herstellung von β-Ionolydentriphenylphosphoniumhydrogensulfat in einem Methanol/Wasser-Gemisch

585,5g Triphenylphosphin wurden unter Rühren in einem Gemisch aus 1014,2 g Methanol und 221,4 g Wasser bei einer Temperatur von 40°C vorgelegt. Anschließend wurden 304,7 g einer 75%igen Schwefelsäure innerhalb von 1 h zugetropft und im Anschluss daran bei einer Temperatur von 50°C 544,8 g 92,1 %iges β-Vinyl-Ionol innerhalb von 4 h zugegeben. Der Ansatz wurde 4 h bei 50°C nachgerührt und extraktiv aufgearbeitet. Man erhielt die Zielverbindung in einer Ausbeute von 97,9% d. Th. (bezogen auf eingesetztes Triphenylphosphin).

## Patentansprüche

1. Verfahren zur Herstellung von quartären Phosphoniumsalzen durch Umsetzung eines Trialkyl-, Trialkenyl- oder Triarylphosphins mit einem gegebenenfalls substituierten, ein- oder mehrfach ungesättigten aliphatischen, cycloaliphatischen oder aromatisch-aliphatischen Alkohol mit 3 bis 25 Kohlenstoffatomen oder seinen Carbonsäureestern oder Ethern in Gegenwart einer Säure oder einem gegebenenfalls substituierten, aliphatischen, cycloaliphatischen oder aromatisch-aliphatischen Halogenid mit 3 bis 25 Kohlenstoffatomen, **dadurch gekennzeichnet, dass** man die Umsetzung in einem ternären Lösungsmittelgemisch enthaltend Wasser, einen Alkohol mit 1 bis 6 Kohlenstoffatomen und einen Kohlenwasserstoff mit 5 bis 12 Kohlenstoffatomen oder einem Gemisch von verschiedenen Kohlenwasserstoffen mit 5 bis 12 Kohlenstoffatomen durchführt.

2. Verfahren nach Anspruch 1, **dadurch gekennzeichnet, dass** man zur Herstellung von quartären Phosphoniumsalzen der allgemeinen Formel I
[R¹-P(R²)₃]⁺ X⁻ (I),
wobei
R¹ einen gegebenenfalls substituierten, ein- oder mehrfach ungesättigten a- liphatischen, cycloaliphatischen oder aromatisch-aliphatischen Rest mit 3 bis 25 Kohlenstoffatomen,
R² einen Alkyl-, Alkenyl- oder Arylrest mit 1 bis 9 Kohlenstoffatomen und
X das Anionenäquivalent einer organischen oder anorganischen Säure
bedeutet, ein Phosphin der allgemeinen Formel II
P(R²)₃ (II),
wobei R² die oben angegebene Bedeutung besitzt, mit einem ein- oder mehrfach ungesättigten Elektrophil der allgemeinen Formeln III oder IV,
R¹-Y (III) 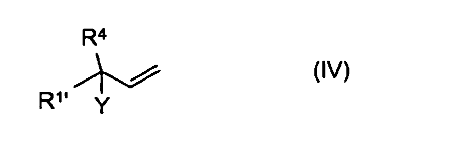
umsetzt,
wobei R¹ die oben angegebene Bedeutung besitzt und
R^{1'} einen gegebenenfalls substituierten, aliphatischen, cycloaliphatischen oder aromatisch-aliphatischen Kohlenwasserstoffrest mit 1 bis 21 Kohlenstoff- atomen,
Y OH, Cl, Br, O(CO)R³ oder OR³ bedeutet und R³ für einen aliphatischen Kohlenwasserstoffrest mit 1 bis 6 Kohlenstoffatomen steht und
R⁴ H oder CH₃
bedeutet und im Fall der Umsetzung eines Elektrophils der allgemeinen Formel IV R¹ in Formel I für ein Strukturelement der allgemeinen Formel V 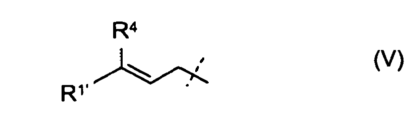 steht, wobei R1' und R⁴ die oben angegebenen Bedeutungen besitzen.

3. Verfahren nach einem der Ansprüche 1 oder 2, **dadurch gekennzeichnet, dass** man zur Herstellung von quartären Phosphoniumsalzen der allgemeinen Formel I' 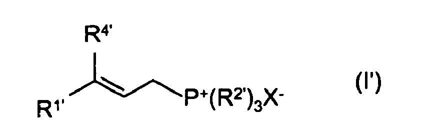 wobei
R^{1'} einen gegebenenfalls substituierten, aliphatischen, cycloaliphatischen oder aromatisch-aliphatischen Rest mit 1 bis 21 Kohlenstoffatomen,
R^{2'} einen Arylrest mit 1 bis 9 Kohlenstoffatomen,
R^{4'} H oder CH₃ und
X das Anionenäquivalent einer organischen oder anorganischen Säure
bedeutet,
ein Phosphin der allgemeinen Formel II'
P(R^{2'})₃ (II'),
wobei R^{2'} die oben angegebene Bedeutung besitzt,
mit einem ein- oder mehrfach ungesättigten Elektrophil der allgemeinen Formeln IV oder VI, 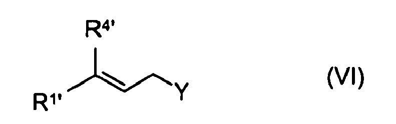 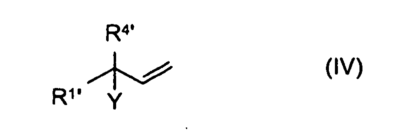 umsetzt,
wobei R^{1'} und R^{4'} die oben angegebenen Bedeutungen besitzen und
Y OH, Cl, Br, O(CO)R³ oder OR³ bedeutet und R³ für einen aliphatischen Kohlenwasserstoffrest mit 1 bis 6 Kohlenstoffatomen steht.

4. Verfahren nach einem der Ansprüche 1 bis 3, **dadurch gekennzeichnet, dass** man als Phosphin der allgemeinen Formel II Triphenylphosphin einsetzt.

5. Verfahren nach einem der Ansprüche 1 bis 4, **dadurch gekennzeichnet, dass** man zur Herstellung von quartären Phosphoniumsalzen der Formel I" 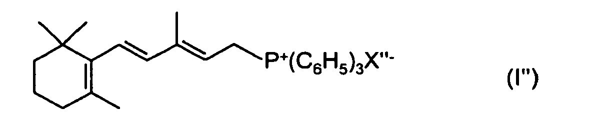 wobei
X" Cl, Br oder HSO₄ bedeutet,
Triphenylphosphin mit β-Vinyl-Ionol umsetzt.

6. Verfahren nach einem der Ansprüche 1 bis 5, **dadurch gekennzeichnet, dass** man ein ternäres Lösemittelgemisch bestehend aus Wasser, einem Alkohol mit 1 bis 6 Kohlenstoffatomen und einem Kohlenwasserstoff mit 5 bis 12 Kohlenstoffatomen oder einem Gemisch von verschiedenen Kohlenwasserstoffen mit 5 bis 12 Kohlenstoffatomen einsetzt.

7. Verfahren nach einem der Ansprüche 1 bis 6, **dadurch gekennzeichnet, dass** man ein ternäres Lösungsmittelgemisch bestehend aus Wasser, Methanol und einem Kohlenwasserstoff mit 7 Kohlenstoffatomen oder einem Gemisch von verschiedenen Kohlenwasserstoffen mit 7 Kohlenstoffatomen einsetzt.

8. Verfahren nach einem der Ansprüche 1 bis 7, **dadurch gekennzeichnet, dass** man ein ternäres Lösemittelgemisch einsetzt, das zu mindestens 5 Gew.-% aus Wasser besteht.

9. Verfahren nach Anspruch 1 bis 8, **dadurch gekennzeichnet, dass** man ein ternäres Lösemittelgemisch bestehend aus
55 - 85 Gew.-% Methanol
10 - 25 Gew.-% Heptan und
5 - 20 Gew.-% Wasser,
wobei sich die innerhalb der genannten Bereiche gewählten Anteile zu 100 Gew.-% addieren müssen,
einsetzt.

10. Verfahren nach einem der Ansprüche 1 bis 9, **dadurch gekennzeichnet, dass** das ternäre Lösemittelgemisch in Form eines zweiphasigen Systems vorliegt.

11. Verfahren nach einem der Ansprüche 1 bis 10, **dadurch gekennzeichnet, dass** man als Säure Salzsäure oder Schwefelsäure einsetzt.

12. Verfahren nach einem der Ansprüche 1 bis 11, **dadurch gekennzeichnet, dass** man das Lösemittelgemisch nach erfolgter Umsetzung von den weiteren Komponenten des Reaktionsgemisches abtrennt und, gegebenenfalls nach Einstellung der gewählten Zusammensetzung durch Zugabe mindestens einer der Komponenten des Lösemittelgemisches, zurückführt.

13. Verfahren zur Synthese von Retinol (Vitamin A), Vitamin A-Acetat, Vitamin A-Propionat, Vitamin A-Palmitat, Retinal, Retinsäuren, β-Carotin, α-Carotin, δ-Carotin, Zeaxanthin, Astaxanthin, Canthaxanthin, Lycopin, Citranaxanthin, β-Apo-8'-carotinal, Crocetin, α-Cryptoxanthin, β-Cryptoxanthin, Phytoen, Lutein, Bixin, Capsanthin, Capsorubin, β-Apo-8'-carotinsäuremethylester, β-Apo-8'-carotinsäureethylester, β-Apo-8'-carotinsäurepropionylester oder β-Apo-8'-carotinsäurepalmitylester durch Herstellung von quaternären Phosphoniumsalzen der allgemeinen Formel I gemäß einem der Ansprüche 1 bis 12 und anschließende Wittig-Olefinierung.

## Claims

1. A process for preparing quaternary phosphonium salts by reacting a trialkyl-, trialkenyl- or triarylphosphine with an optionally substituted monounsaturated or polyunsaturated aliphatic, cycloaliphatic or aromatic-aliphatic alcohol having from 3 to 25 carbon atoms or its carboxylic acid esters or ethers in the presence of an acid or an optionally substituted aliphatic, cycloaliphatic or aromatic-aliphatic halide having from 3 to 25 carbon atoms, which comprises carrying out the reaction in a ternary solvent mixture comprising water, an alcohol having from 1 to 6 carbon atoms and a hydrocarbon having from 5 to 12 carbon atoms or a mixture of various hydrocarbons having from 5 to 12 carbon atoms.

2. The process according to claim 1, wherein, to prepare quaternary phosphonium salts of the general formula I
[R¹-P(R²)₃]⁺ X⁻ (I),
where
R¹ is an optionally substituted monounsaturated or polyunsaturated aliphatic, cycloaliphatic or aromatic-aliphatic group having from 3 to 25 carbon atoms,
R² is an alkyl, alkenyl or aryl group having from 1 to 9 carbon atoms and
X is the anion equivalent of an organic or inorganic acid,
a phosphine of the general formula II
P(R²)₃ (II),
where R² has the meaning given above, is reacted with a monounsaturated or polyunsaturated electrophile of the general formula III or IV,
R¹-Y (III) 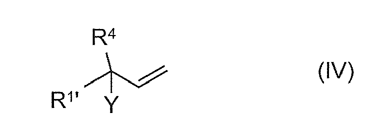
where R¹ has the meaning given above and
R^{1'} is an optionally substituted, aliphatic, cycloaliphatic or aromatic-aliphatic hydrocarbon group having from 1 to 21 carbon atoms,
Y is OH, Cl, Br, O(CO)R³ or OR³ and R³ is an aliphatic hydrocarbon group having from 1 to 6 carbon atoms and
R⁴ is H or CH₃
and, when an electrophile of the general formula IV is reacted, R¹ in formula I is a structural element of the general formula V 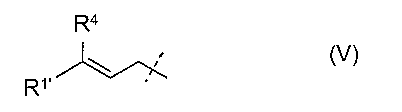 where R^{1'} and R⁴ have the meanings given above.

3. The process according to either of claims 1 and 2, wherein, to prepare quaternary phosphonium salts of the general formula I' 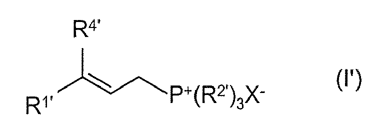 where
R^{1'} is an optionally substituted, aliphatic, cycloaliphatic or aromatic-aliphatic group having from 1 to 21 carbon atoms,
R^{2'} is an aryl group having from 1 to 9 carbon atoms,
R^{4'} is H or CH₃ and
X is the anion equivalent of an organic or inorganic acid,
a phosphine of the general formula II'
P(R^{2'})₃ (II'),
where R^{2'} has the meaning given above,
is reacted with a monounsaturated or polyunsaturated electrophile of the general formula IV or VI, 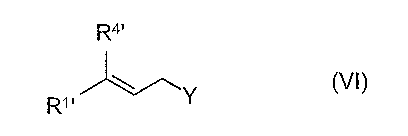 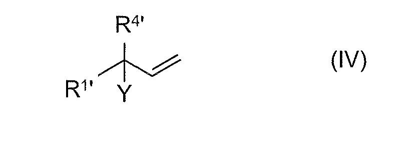 where R^{1'} and R^{4'} have the meanings given above and
Y is OH, Cl, Br, O(CO)R³ or OR³ and R³ is an aliphatic hydrocarbon group having from 1 to 6 carbon atoms.

4. The process according to any of claims 1 to 3, wherein as phosphine of the general formula II use is made of triphenylphosphine.

5. The process according to any of claims 1 to 4, wherein, to prepare quaternary phosphonium salts of the formula I" 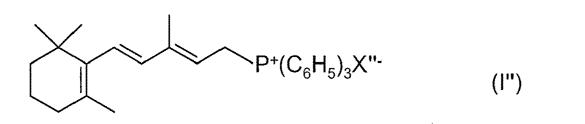 where
X" is Cl, Br or HSO₄,
triphenylphosphine is reacted with β-vinylionol.

6. The process according to any of claims 1 to 5, wherein use is made of a ternary solvent mixture consisting of water, an alcohol having from 1 to 6 carbon atoms and a hydrocarbon having from 5 to 12 carbon atoms or a mixture of various hydrocarbons having from 5 to 12 carbon atoms.

7. The process according to any of claims 1 to 6, wherein use is made of a ternary solvent mixture consisting of water, methanol and a hydrocarbon having 7 carbon atoms or a mixture of various hydrocarbons having 7 carbon atoms.

8. The process according to any of claims 1 to 7, wherein use is made of a ternary solvent mixture which consists of at least 5% by weight of water.

9. The process according to any of claims 1 to 8, wherein use is made of a ternary solvent mixture consisting of
55 - 85% by weight of methanol
10 - 25% by weight of heptane and
5 - 20% by weight of water.
in which case the proportions chosen within said ranges must total 100% by weight.

10. The process according to any of claims 1 to 9, wherein the ternary solvent mixture is in the form of a two-phase system.

11. The process according to any of claims 1 to 10, wherein the acid is hydrochloric acid or sulfuric acid.

12. The process according to any of claims 1 to 11, wherein the solvent mixture, after the reaction is completed, is separated off from the other components of the reaction mixture and, if appropriate after setting the chosen composition by adding at least one of the components of the solvent mixture, is recirculated.

13. A process for the synthesis of retinol (vitamin A), vitamin A acetate, vitamin A propionate, vitamin A palmitate, retinal, retinoic acids, β-carotene, α-carotene, δ-carotene, zeaxanthin, astaxanthin, canthaxanthin, lycopene, citranaxanthin, β-apo-8'-carotenal, crocetin, α-cryptoxanthin, β-cryptoxanthin, phytoene, lutein, bixin, capsanthin, capsorubin, β-apo-8'-carotenoic acid methyl ester, β-apo-8'-carotenoic acid ethyl ester, β-apo-8'-carotenoic acid propionyl ester or β-apo-8'-carotenoic acid palmityl ester by preparing quaternary phosphonium salts of the general formula I according to any of claims 1 to 12 and subsequent Wittig olefination.

## Revendications

1. Procédé pour la préparation de sels de phosphonium quaternaire par transformation d'une trialkylphosphine, d'une trialcénylphosphine ou d'une triarylphosphine avec un alcool aliphatique, cycloaliphatique ou aromatique-aliphatique, le cas échéant substitué, monoinsaturé ou polyinsaturé, comprenant 3 à 25 atomes de carbone ou ses esters d'acide carboxylique ou ses éthers en présence d'un acide ou avec un halogénure aliphatique, cycloaliphatique ou aromatique-aliphatique, le cas échéant substitué, comprenant 3 à 25 atomes de carbone, **caractérisé en ce qu'**on réalise la transformation dans un mélange de solvants ternaire, contenant de l'eau, un alcool comprenant 1 à 6 atomes de carbone et un hydrocarbure comprenant 5 à 12 atomes de carbone ou un mélange de différents hydrocarbures comprenant 5 à 12 atomes de carbone.

2. Procédé selon la revendication 1, **caractérisé en ce que,** pour la préparation de sels de phosphonium quaternaire de formule générale I
[R¹-P(R²)₃]⁺X⁻ (I),
où
R¹ signifie un radical aliphatique, cycloaliphatique ou aromatique-aliphatique, le cas échéant substitué, monoinsaturé ou polyinsaturé, comprenant 3 à 25 atomes de carbone
R² signifie un radical alkyle, alcényle ou aryle comprenant 1 à 9 atomes de carbone et
X signifie l'équivalent anionique d'un acide organique ou inorganique,
on transforme une phosphine de formule générale II
P(R²)₃ (II),
où R² présente la signification indiquée ci-dessus, avec un électrophile monoinsaturé ou polyinsaturé des formules générales III ou IV,
R¹-Y (III) 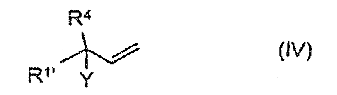 où R¹ présente la signification indiquée ci-dessus et
R^{1'} signifie un radical hydrocarboné aliphatique, cycloaliphatique ou aromatique-aliphatique, le cas échéant substitué, comprenant 1 à 21 atomes de carbone,
Y signifie OH, Cl, Br, O(CO)R³ ou OR³ et R³ représente un radical hydrocarboné aliphatique comprenant 1 à 6 atomes de carbone et
R⁴ signifie H ou CH₃
et, dans le cas de la transformation d'un électrophile de formule générale IV, R¹ dans la formule I représente un élément de structure de formule générale V 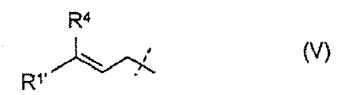 où R^{1'} et R⁴ présentent les significations indiquées ci-dessus.

3. Procédé selon l'une quelconque des revendications 1 ou 2, **caractérisé en ce que,** pour la préparation de sels de phosphonium quaternaire de formule générale I' 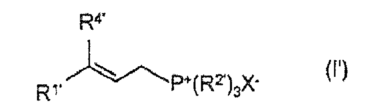 où
R^{1'} signifie un radical aliphatique, cycloaliphatique ou aromatique-aliphatique, le cas échéant substitué, comprenant 1 à 21 atomes de carbone,
R^{2'} signifie un radical aryle comprenant 1 à 9 atomes de carbone,
R^{4'} signifie H ou CH₃ et
X signifie l'équivalent anionique d'un acide organique ou inorganique,
on transforme une phosphine de formule générale II'
P(R^{2'})₃ (II'),
où R^{2'} présente la signification indiquée ci-dessus, avec un électrophile monoinsaturé ou polyinsaturé des formules générales IV ou VI, 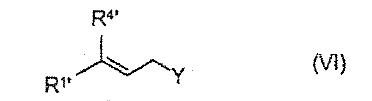 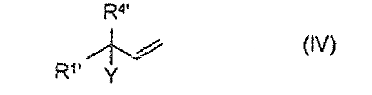 où R^{1'} et R^{4'} présentent les significations indiquées ci-dessus et
Y signifie OH, Cl, Br, O(CO)R³ ou OR³ et R³ représente un radical hydrocarboné aliphatique comprenant 1 à 6 atomes de carbone.

4. Procédé selon l'une quelconque des revendications 1 à 3, **caractérisé en ce qu'**on utilise, comme phosphine de formule générale II, de la triphénylphosphine.

5. Procédé selon l'une quelconque des revendications 1 à 4, **caractérisé en ce que,** pour la préparation de sels de phosphonium quaternaire de formule générale I" 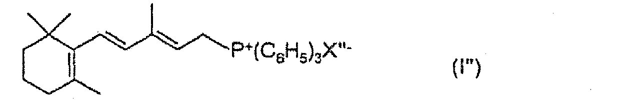 où
X" signifie Cl, Br ou HSO₄,
on transforme de la triphénylphosphine avec du β-vinyl-ionol.

6. Procédé selon l'une quelconque des revendications 1 à 5, **caractérisé en ce qu'**on utilise un mélange de solvants ternaire, constitué par de l'eau, un alcool comprenant 1 à 6 atomes de carbone et un hydrocarbure comprenant 5 à 12 atomes de carbone ou un mélange de différents hydrocarbures comprenant 5 à 12 atomes de carbone.

7. Procédé selon l'une quelconque des revendications 1 à 6, **caractérisé en ce qu'**on utilise un mélange de solvants ternaire, constitué par de l'eau, du méthanol et un hydrocarbure comprenant 7 atomes de carbone ou un mélange de différents hydrocarbures comprenant 7 atomes de carbone.

8. Procédé selon l'une quelconque des revendications 1 à 7, **caractérisé en ce qu'**on utilise un mélange de solvants ternaire, qui est constitué à raison d'au moins 5% en poids d'eau.

9. Procédé selon l'une quelconque des revendications 1 à 8, **caractérisé en ce qu'**on utilise un mélange de solvants ternaire, constitué par
- 55-85% en poids de méthanol
- 10-25% en poids d'heptane et
- 5-20% en poids d'eau
où la somme des proportions choisies dans les plages mentionnées doit valoir 100% en poids.

10. Procédé selon l'une quelconque des revendications 1 à 9, **caractérisé en ce que** le mélange de solvants ternaire se trouve sous forme d'un système à deux phases.

11. Procédé selon l'une quelconque des revendications 1 à 10, **caractérisé en ce qu'**on utilise, comme acide, de l'acide chlorhydrique ou de l'acide sulfurique.

12. Procédé selon l'une quelconque des revendications 1 à 11, **caractérisé en ce qu'**on sépare le mélange de solvants, après la fin de la transformation, des autres composants du mélange réactionnel et on le recycle, le cas échéant après réglage de la composition choisie par addition d'au moins un des composants du mélange de solvants.

13. Procédé pour la synthèse de rétinol (vitamine A), d'acétate de vitamine A, de propionate de vitamine A, de palmitate de vitamine A, de rétinal, d'acides rétinoïques, de β-carotène, d'α-carotène, de δ-carotène, de zéaxanthine, d'astaxanthine, de canthaxanthine, de lycopine, de citranaxanthine, de β-apo-8'-caroténal, de crocétine, d'α-cryptoxanthine, de β-cryptoxanthine, de phytoène, de lutéine, de bixine, de capsanthine, de capsorubine, d'ester méthylique de l'acide β-apo-8'-caroténique, d'ester éthylique de l'acide β-apo-8'-caroténique, de l'ester propionique de l'acide β-apo-8'-caroténique ou de l'ester palmitique de l'acide β-apo-8'-caroténique par préparation de sels de phosphonium quaternaire de formule générale I selon l'une quelconque des revendications 1 à 12 et oléfination de Wittig consécutive.
